# FASCICULE DE BREVET EUROPEEN

(11) **EP 1 627 530 B1**
(45) Date de publication et mention de la délivrance du brevet: **02.11.2006**
(21) Numéro de dépôt: 04732374.6
(22) Date de dépôt: 12.05.2004
(51) Int. Cl.: H04N 7/16, H04N 7/167, G06F 1/00, G11B 20/00

(54) **MÉTHODE DE COMPTABILISATION D'UNE DURÉE DANS UN MODULE DE SÉCURITÉ**
VERFAHREN ZUR ZEITMESSUNG IN EINEM SICHERHEITSMODUL
METHOD FOR RECORDING AN ELAPSED TIME PERIOD IN A SECURITY MODULE

(30) Priorité: 14.05.2003 CH 8432003
(43) Date de publication de la demande: 22.02.2006
(73) Titulaire: NagraCard SA, 1033 Cheseaux-sur-Lausanne (CH)
(72) Inventeur: BRIQUE, Olivier, CH-1802 Corseaux (CH); COCHARD, Jimmy, CH-1616 Attalens (CH)
(74) Mandataire: Wenger, Joel-Théophile
(86) Numéro de dépôt international: PCT/IB2004/050651
(87) Numéro de publication internationale: WO 2004/102967

(56) Documents cités:
- EP-A- 0 912 052
- EP-A- 0 975 165

## Description

La présente invention concerne le domaine des modules de sécurité insérés dans un appareil recevant des données numériques encryptées. Plus particulièrement, la méthode de l'invention vise à fournir la date et l'heure courante à un module de sécurité et à gérer des droits de décryption en fonction de la durée de validité des données reçues ou stockées dans l'appareil.

Cette méthode s'applique par exemple à un enregistreur vidéo numérique utilisé pour la réception et le stockage de programmes de télévision à péage.

Un enregistreur vidéo numérique appelé ci-après PVR (Personal Video Recorder) est un récepteur/décodeur de télévision à péage pourvu d'un disque dur permettant de stocker des données audio/vidéo numériques encryptées afin de pouvoir les visualiser en différé.

Un PVR, comme un enregistreur vidéo à bande magnétique du type VHS, est aussi pourvu de fonctions d'avance et de recul rapide. Ces fonctions permettent, par exemple, une recherche d'une séquence particulière parmi les données enregistrées sur le disque dur ou le retour au début d'un programme enregistré après une première visualisation.

Les données numériques audio/vidéo stockées sont encryptées avec des mots de contrôle CW (control word) contenus dans des messages de contrôle ECM (Entitlement Control Message) qui accompagnent les données audio/vidéo encryptées. Cet ensemble de données audio/vidéo et ECM est appelé contenu dans la suite de la description de l'invention. Un module de contrôle d'accès ou module de sécurité sous forme d'une carte à puce amovible ou intégrée dans le PVR contient des droits attribués à un utilisateur pour décrypter les données audio/vidéo.

Pour visualiser le contenu stocké dans le disque dur, le décodeur décrypte ce contenu à l'aide de messages de gestion de droits EMM (Entitlement Management Message) enregistrés dans le module de sécurité, ces messages comprenant les clés nécessaires à la décryption des ECM contenant les mots de contrôle CW servant à la décryption du contenu.

Le flux de données numérique transmis par un centre de gestion vers les PVR est encrypté afin de pouvoir en contrôler l'utilisation et de définir des conditions pour une telle utilisation. Les mots de contrôle CW chargés de l'encryption sont changés à intervalles réguliers (typiquement entre 5 et 30 secondes) afin d'empêcher toute tentative de reconstitution abusive d'un tel mot de contrôle.

Pour que le PVR / décodeur puisse décrypter le flux encrypté par ces mots de contrôle, ces derniers sont envoyés dans des messages de contrôle ECM et encryptés par une clé de transmission propre au système.

Lors de la décryption d'un message de contrôle ECM, la présence dans le module de sécurité du droit d'accès au contenu est vérifiée. Ce droit est géré par les messages de gestion EMM qui chargent un tel droit dans le module de sécurité.

La comptabilisation de l'utilisation d'un contenu encrypté est généralement basée sur le principe de l'abonnement, de l'achat spontané ou impulsif de contenus d'émissions télévisées ou du paiement par unité de temps.

L'abonnement permet de définir un droit associé à un ou plusieurs canaux de diffusion transmettant ces contenus et permet à l'utilisateur de les visualiser en clair si le droit est présent dans son module de sécurité.

Il est aussi est possible de définir des droits propres à un type de contenu, tel qu'un film, une manifestation sportive ou une émission de variétés. L'utilisateur peut acheter ce contenu qui sera spécifiquement géré par ce droit. Cette méthode est connue sous l'appellation "pay-per-view" (PPV).

Pour ce qui concerne le paiement par unité de temps, le module de sécurité comprend un crédit qui est débité en fonction de la consommation réelle de l'utilisateur. Ainsi par exemple, une unité sera débitée de ce crédit chaque minute quel que soit le canal ou le contenu visualisé. Il est possible selon les réalisations techniques, de varier l'unité de comptabilisation, soit dans la durée, soit dans la valeur du temps alloué ou en combinant ces deux paramètres pour adapter la facturation au type de contenu consommé.

Un message de contrôle ECM ne contient pas uniquement le mot de contrôle CW mais également les conditions pour que ce mot soit renvoyé au PVR. Lors de la décryption des mots de contrôle, il sera vérifié si un droit associé aux conditions d'accès incluses dans le message est présent dans le module de sécurité. Le mot de contrôle n'est retourné au PVR que lorsque le résultat de la vérification est positif. Ce mot de contrôle contenu dans le message de contrôle ECM est généralement encore encrypté par une clé de transmission.

En résumé les trois éléments suivants sont nécessaires pour décrypter un flux de données audio/vidéo numériques diffusé à un moment donné:
- le contenu encrypté par un ou une pluralité de mots de contrôle CW,
- le ou les messages de contrôle ECM contenant les mots de contrôle CW et les conditions d'accès,
- le droit correspondant stocké dans le module de sécurité permettant de vérifier les conditions d'accès.

Une condition d'accès associée au droit peut consister en une durée de validité, c'est-à-dire une période pendant laquelle il est possible de décrypter le contenu avec les mots de contrôle. Lorsque cette durée est expirée, la condition d'accès aux mots de contrôles servant à décrypter le contenu devient caduque et la décryption ne peut plus s'effectuer.

Pour exploiter le paramètre temps ou durée relatif aux conditions d'accès, il est nécessaire de disposer d'une horloge de référence sûre. L'expiration de la validité d'un droit doit être contrôlée comme un temps absolu et non pas comme une durée relative. Par exemple, un droit d'accès de 24 heures à un contenu encrypté et stocké sur le disque dur débute à une date et à une heure déterminée pour se terminer un jour après à la même heure. Il n'est donc pas suffisant d'accorder la durée de 24 heures à ce droit car il reste la possibilité de manipuler l'horloge afin de reculer la date courante d'un jour et ainsi de bénéficier en permanence d'un droit d'une durée de 24 heures.

La date et l'heure courante sont fournies au module de sécurité par l'horloge interne du PVR appelée aussi RTC (Real Time Clock) qui est généralement alimentée par une batterie permettant son fonctionnement même si l'appareil est éteint.

Cette horloge peut être réglée à une date et à une heure antérieure aux valeurs courantes pour autoriser la visualisation d'un contenu dont la validité aurait expiré. Il y a donc possibilité d'allonger abusivement un droit avec des conditions d'accès modifiées dans le module de sécurité par manipulation de l'horloge du PVR.

Il s'agit donc de créer un droit dans le module de sécurité, à l'aide des messages de gestion EMM, qui commence à un moment déterminé pour se terminer après une certaine période de validité. Comme dans la plupart des cas, un PVR ne possède pas de voie de retour le reliant au centre de gestion, la date et l'heure courante ne peuvent pas être fournies régulièrement au module de sécurité par des moyens sécurisés provenant directement du centre de gestion

Un autre aspect du problème est constitué par le fait que le module de sécurité, bien que disposant de mémoire sécurisée, ne dispose pas d'une horloge en temps réel et qu'il lui est impossible, par ses propres moyens, de déterminer une durée réelle telle que 24 heures. Ainsi, si un utilisateur est autorisé à accéder un service (ou un film) durant 24 heures, le module de sécurité reste dépendant d'informations extérieures pour déterminer l'expiration de cette période.

Le but de la présente invention est de proposer une méthode pour fournir un contrôle de la durée de validité d'un droit enregistré sur un module sécurité en termes absolus par une gestion des différents paramètres reçus lui permettant de déterminer une date et une heure d'expiration.

Un autre but est d'empêcher de créer un droit dans le module de sécurité avant ou après une certaine date ou heure prédéfinie.

Ces buts sont atteints par une méthode de comptabilisation d'une durée dans un module de sécurité inséré dans un appareil comportant une horloge interne, cet appareil recevant un flux de données numériques encryptées par des mots de contrôle contenus dans des messages de contrôle ECM, cette méthode comprenant les étapes suivantes :
- réception de données provenant de l'horloge interne de l'appareil comprenant une information temporelle courante,
- stockage des données courantes représentant l'information temporelle courante dans le module de sécurité,
- réception d'un message de contrôle ECM requerrant la décryption d'au moins un mot de contrôle,
- lecture de données précédentes représentant une information temporelle précédente au moment du traitement du précédent message de contrôle ECM,
- traitement du message de contrôle ECM lorsque l'information courante est en avance temporellement sur l'information précédente.

Ainsi la méthode selon l'invention a pour but de garantir qu'à chaque décryption d'un ECM, l'heure avance.

On entend par information temporelle toute forme de compteur qui ne correspond pas nécessairement à une date et/ou une heure. L'essentiel est de fournir au module de sécurité une information sur l'avance effective du temps afin de déterminer une durée prédéfinie.

L'appareil en question peut être un décodeur de télévision numérique, un enregistreur numérique PVR (Personal Video Recorder) ou encore un ordinateur personnel.

Il n'est pas nécessaire que l'heure et la date générée par le décodeur soient celles que nous utilisons habituellement. Un tel exemple est proposé par le Swatch Beat qui est une division de 24 heures par 1000. Le décodeur génère des impulsions (ou tics) à un rythme régulier de 3 secondes. Ces signaux sont transmis et comptabilisés par le décodeur pour former une information temporelle propre et reconnue dans ce système. La valeur courante de ce paramètre sera ainsi plus grande que la valeur précédente, ce qui permet de déterminer l'avance de l'heure. La valeur courante est stockée dans une mémoire et à la réception d'une nouvelle valeur, celle-ci remplace la valeur courante seulement si la nouvelle information temporelle est en avance temporellement sur l'information temporelle courante. Ainsi à chaque impulsion, le décodeur détermine l'information temporelle courante et la transmet au module de sécurité. Ce dernier met à jour le contenu de sa mémoire courante.

De plus, l'information temporelle peut être stockée sous forme d'une représentation (compression) ou de cryptogramme à condition de permettre la distinction de l'avance, (accroissement de certains digits ou bits prédéterminés ou changement de préfixes ou suffixes particuliers etc.).

Lorsque l'appareil est connecté à un centre de gestion comme dans le cas d'un enregistreur numérique PVR, le centre de gestion peut diffuser l'information temporelle courante pour venir mettre à jour l'horloge interne du décodeur.

Selon une variante préférée, la méthode de l'invention s'applique à un enregistreur vidéo numérique de programmes de télévision numérique à péage PVR comportant une horloge RTC interne permanente.

Selon une variante de réalisation, il est vérifié de plus lors de la réception d'une nouvelle information temporelle par le module de sécurité que cette information est en avance sur l'information précédemment reçue, indépendamment du moment de la décryption des mots de contrôle. En effet, le rythme de transmission des messages contenant ces informations temporelles par le décodeur est un rythme qui lui et propre. Cette condition additionnelle impose que l'heure avance continuellement.

Le PVR est connecté sporadiquement à un centre de gestion délivrant un flux de données audio vidéo numériques encryptées par des mots de contrôle contenus dans les messages de contrôle ECM accompagnant lesdites données audio vidéo. Ces messages de contrôle contiennent également une information temporelle qui est sécurisée car encryptée par le centre de gestion.

Le module de sécurité contient des droits servant à vérifier les conditions d'accès contenues dans les messages de contrôle ECM conjointement au mots de contrôle.

Les droits contenus dans le module de sécurité autorisent la décryption des ECM seulement si l'information temporelle courante représentant la date et l'heure provenant de l'horloge du PVR est en avance sur l'information temporelle précédente. Cette condition ne peut plus être satisfaite lorsque l'horloge interne du PVR est retardée. En effet, dans ce cas, la décryption des messages de contrôle ECM enregistrés sur le disque dur ne pourra pas s'effectuer faute de droit valide. Seule une connexion du PVR au centre de gestion permettra la remise à jour de l'horloge au moyen des ECM diffusés contenant une information temporelle représentant la date et l'heure réelles.

Selon un mode de réalisation, la date et l'heure du PVR sont transmis au module de sécurité sous forme encryptée avec une clé de session afin d'éviter toute modification de la valeur. Une vérification est également effectuée pour empêcher une mise à jour avec des valeurs fantaisistes.

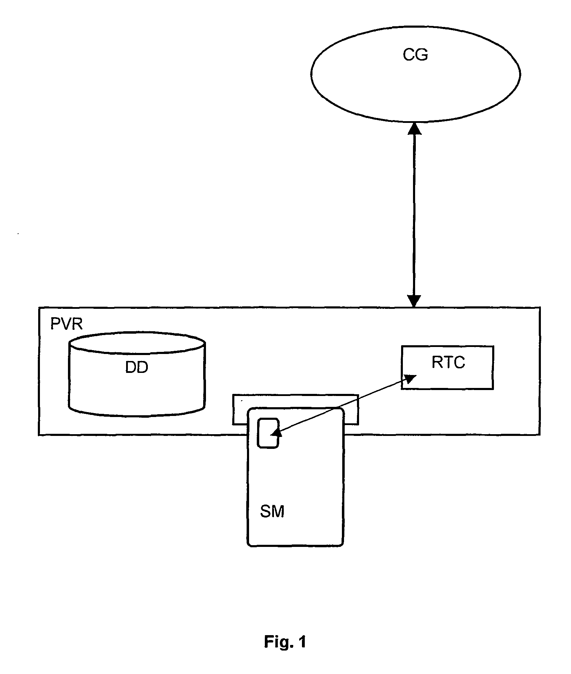

L'unique figure 1 illustre un PVR équipé d'un disque dur DD comportant une horloge interne RTC. Un module de sécurité amovible SM délivre les droits nécessaires à la décryption du flux de données audio vidéo provenant du centre de gestion CG et à la décryption du contenu enregistré sur le disque dur DD. Le module de sécurité SM contient en plus de la durée de validité des droits, une date / heure de début de validité fournie par l'horloge RTC.

Le PVR est utilisé d'une part comme décodeur en ligne d'un flux de données audio vidéo diffusé et d'autre part comme enregistreur de données pour leur visualisation ultérieure.

Dans le premier mode d'utilisation dit en-ligne, les ECM incluant des conditions d'accès et une information temporelle suffisent pour la gestion des droits basés sur une durée du fait que le message de contrôle ECM contient déjà les informations temporelles qui permettent de déterminer la durée du droit.

Dans le second mode où un contenu est enregistré et visualisé en différé, l'information temporelle des messages de contrôle ECM est ignorée, dans ce cas, ce sont les informations temporelles provenant du décodeur PVR qui serviront à calculer la durée de validité du droit.

L'heure courante stockée dans le module de sécurité est utilisée pour calculer la durée d'un droit alloué par l'achat d'un programme, cet achat est géré par le biais des messages de gestion EMM. Selon le type de réalisation, il peut être imposé que la réception des messages EMM soit effectuée en ligne (directement reçu dans le flux) ou utiliser un tel message stocké sur l'unité de stockage. Dans le premier cas, il sera avantageux d'utiliser l'information temporelle contenue dans un tel message car elle sera considérée comme sûre puisque provenant directement du centre de gestion. A noter que malgré cette apparente sécurité, l'on vérifiera que cette date est égale ou postérieure à la dernière date connue du module de sécurité.

Dans le deuxième cas, le message de gestion EMM stocké ne peut être utilisé pour mettre à jour l'horloge interne du module de sécurité et c'est la dernière date connue qui va servir à calculer la durée d'attribution du droit.

Les messages de contrôle ECM utilisés dans la méthode selon l'invention contiennent, outre une description du type de contenu et les mots de contrôle associés, une information temporelle. Lors de la réception en direct d'un flux contenant des messages de contrôle ECM, l'information temporelle sera utilisée pour la détermination de l'heure courante.

La définition de l'avance temporelle autorisant la décryption des mots de contrôle est déterminée par la différence entre l'information temporelle courante fournie par l'horloge du décodeur et l'information temporelle précédente qui représente le moment de la dernière décryption d'un mot de contrôle. Cette différence ne peut être simplement égale (ou proche) à la période de changement des mots de contrôle. En effet, il faut tenir compte qu'en mode de défilement rapide, cette période est multipliée par 10 par exemple.

Cette différence sera donc définie dans notre exemple comme étant proche de 1/10 de la période de changement des mots de contrôle.

Cette valeur de différence définit le taux d'extension de la validité réelle. Par exemple, lorsque la période de changement des mots de contrôle est de 10 secondes et le rapport entre la vitesse de défilement élevée et la vitesse normale est de 10, la valeur minimale de la différence sera de 10 secondes divisée par 10, c'est à dire de 1 seconde. En conséquence, le module de sécurité acceptera de décrypter un nouveau mot de contrôle pour autant que son horloge aie avancé d'une seconde par rapport au moment de la décryption du dernier mot de contrôle.

Une fraude envisageable consisterait à fournir au module de sécurité une information temporelle à un rythme plus lent. Ceci serait réalisable par le montage d'un quartz de fréquence plus faible sur l'horloge interne du PVR. Le module de sécurité ne peut pas distinguer à priori la vitesse de défilement élevée de la vitesse normale lors de la décryption des ECM. Par conséquent, la durée du droit serait multipliée par un facteur 10, c'est à dire par exemple étendue à 10 jours au lieu de celle prévue de 1 jour.

Il est à noter que dans ce cas il ne sera plus possible d'utiliser le mode de défilement rapide car la période de changement des mots de contrôle devient inférieure à la valeur de différence minimale.

Cet inconvénient peut être considéré comme admissible du fait que l'utilisateur a acheté le droit au moins une fois. De plus, lors de l'achat d'un droit plus récent, l'ancienne information temporelle mémorisée dans le module de sécurité est remplacée par une nouvelle information temporelle représentant la date/heure de l'achat. Le droit étendu frauduleusement est ainsi immédiatement expiré et l'intérêt de cette fraude reste donc limité.

Il existe la possibilité pour le module de sécurité de savoir dans quel mode le PVR se trouve et. donc d'ajuster la durée minimale entre deux décryptions de mots de contrôle. En mode rapide, cette durée serait d'une seconde alors qu'en mode normal, cette duré est fixée à 10 secondes. Ainsi, un fraudeur devrait non seulement modifier la fréquence de l'horloge du PVR mais également des commandes transmises entre le PVR et le module de sécurité.

La validité d'un droit est déterminée par le module de sécurité à partir de l'information temporelle enregistrée lors de l'achat d'un programme. Il est donc recommandé de mettre à jour cette information dans le module de sécurité à chaque achat, sinon le nouveau droit créé aura une période de validité réduite au cas où l'information temporelle enregistrée dans le module de sécurité serait trop ancienne.

Du fait que le module de sécurité n'accepte pas que le décodeur PVR lui fournisse une information temporelle antérieure à l'information courante de l'horloge RTC, la gestion de cette horloge doit être adaptée à certaines exigences:
- L'horloge RTC du PVR sera de préférence alimentée avec une batterie qui maintient son fonctionnement même lorsque le PVR est déclenché.
- Une valeur représentative de la date et de l'heure est transmise au module de sécurité par l'horloge RTC.
- La mise à jour de cette horloge RTC provoquera de préférence l'avance de l'heure courante,
- Les valeurs sont ajustées avec une table de description de la date et de l'heure TDT (Time and Date Description Table) à laquelle le PVR se réfère lorsqu'il est en ligne, c'est-à-dire lorsqu'il est connecté au centre de gestion. Cette table est synchronisée avec l'information temporelle contenue dans les ECM diffusés par le centre de gestion.
- L'utilisateur du PVR ne doit pas pouvoir ajuster directement l'horloge RTC. Si la date et l'heure affichées sur l'écran du panneau frontal du PVR doivent néanmoins être ajustées, le réglage est d'abord stocké dans une mémoire non volatile comme étant une différence avec la valeur courante de l'horloge RTC. La nouvelle date / heure à afficher sera alors ensuite calculée à partir de cette différence stockée.
- Lorsque le PVR est hors ligne, l'horloge RTC ne devrait pas pouvoir être modifiée ou du moins pas retardée par rapport à la valeur enregistrée dans le module de sécurité.
- Lorsque le PVR est en ligne et si l'horloge RTC est en retard par rapport à la date / heure de référence de la table TDT, l'horloge RTC est re-synchronisée en une seule étape avec cette référence.
- Lorsque l'horloge RTC est en avance sur la référence TDT, la re-synchronisation directe comme dans le cas précédent n'est pas souhaitable car la nouvelle information temporelle courante sera en retard par rapport à l'information temporelle précédente stockée dans le module de sécurité. La condition imposant une différence positive entre ces deux informations n'est ainsi plus remplie et les mots de contrôle ne seront donc pas décryptés par le module de sécurité.

Par exemple le PVR est connecté en ligne à 10.00.00 heures lorsque l'horloge RTC du PVR indique 10.02.00 heures c'est à dire 2 minutes en avance. La différence attendue pour décrypter les mots de contrôle étant de 10 secondes.

Le PVR envoie des messages comme suit:
un premier message à 10 00 00 indique que l'heure est 10 02 01
un second message à 10 00 20 indique que l'heure est 10 02 10
un troisième message à 10 00 40 indique que l'heure est 10 02 20 et ainsi de suite.

Au bout de 4 minutes l'horloge RTC du PVR est re-synchronisée avec l'heure indiquée par le centre de gestion tout en conservant la possibilité de décrypter des données stockées dans le disque dur en concordance avec l'heure enregistrée dans le module de sécurité.

Dans le cas d'un ordinateur personnel, la méthode de l'invention s'applique au téléchargement de fichiers tels que logiciels, jeux, films, musique depuis Intemet. L'ordinateur est muni d'un module de sécurité gérant un droit d'accès aux fichiers téléchargés ou d'utilisation de ceux-ci limité dans le temps. L'information temporelle nécessaire est générée par l'horloge interne de l'ordinateur qui peut aussi être mise à jour lors de la connexion de l'ordinateur à Internet.

## Revendications

1. Méthode de comptabilisation d'une durée dans un module de sécurité inséré dans un appareil comportant une horloge interne, cet appareil recevant un flux de données numériques encryptées par des mots de contrôle contenus dans des messages de contrôle ECM, cette méthode comprenant les étapes suivantes :
- réception par le module de sécurité de données provenant de l'horloge interne de l'appareil comprenant une information temporelle courante,
- stockage des données courantes représentant l'information temporelle courante dans le module de sécurité,
- réception par le module de sécurité d'un message de contrôle ECM requerrant la décryption d'au moins un mot de contrôle,
- lecture de données précédentes représentant une information temporelle précédente au moment du traitement du précédent message de contrôle ECM,
- traitement du message de contrôle ECM lorsque l'information courante est en avance temporellement sur l'information précédente.

2. Méthode selon la revendication 1, **caractérisée en ce que** la condition définissant l'avance temporelle est déterminée par la fréquence de changement des mots de contrôle.

3. Méthode selon la revendication 1, **caractérisée en ce que** l'information temporelle courante est stockée dans une mémoire et à la réception d'une nouvelle information temporelle, celle-ci remplace l'information temporelle courante pour autant que la nouvelle information temporelle soit en avance temporellement sur l'information temporelle courante.

4. Méthode selon l'une quelconque des revendications 1 à 3, **caractérisée en ce que** l'information temporelle détermine une date et une heure.

5. Méthode selon la revendication 4, **caractérisée en ce que** l'information temporelle courante du module de sécurité sert à vérifier la durée de validité d'un droit nécessaire à la décryption du flux de données numériques.

6. Méthode selon la revendication 1, **caractérisée en ce que** l'appareil reçoit des informations temporelles lorsqu'il est connecté à un centre de gestion, lesdites informations mettent à jour un compteur dans l'appareil fournissant une valeur représentative de la date et de l'heure qui sera stockée puis comparée avec la valeur de l'information temporelle générée par l'horloge interne de l'appareil.

7. Méthode selon la revendication 6, **caractérisée en ce que** l'horloge interne de l'appareil est mise à jour en fonction du résultat de la comparaison, la nouvelle valeur étant transmise au module de sécurité.

8. Méthode selon la revendication 1, **caractérisée en ce que** l'horloge interne de l'appareil est mise à jour par les informations temporelles transmises par les messages de contrôles ECM diffusés lorsque ledit appareil est connecté à un centre de gestion.

9. Méthode selon l'une quelconque des revendications 1 à 8, **caractérisée en ce que** l'appareil est un enregistreur vidéo numérique PVR de programmes de télévision numérique à péage.

## Claims

1. Duration computing method in a security module inserted into an apparatus comprising an internal clock; this apparatus receiving a digital data stream encrypted by control words contained in the control messages ECM, this method comprising the following steps:
- reception of data coming from the internal clock of the apparatus comprising a current time information,
- storage of the current data representing the current temporal information in the security module,
- reception of a control message ECM requiring the decryption of at least one control word,
- reading of previous data representing previous temporal information at the moment of the processing of the previous control message ECM,
- processing of the control message ECM when the current information is temporally ahead of the previous information.

2. Method according to claim 1, **characterized in that** the condition defining the temporal advance is determined by the frequency of control word changes.

3. Method according to claim 1, **characterized in that** the current temporal information is stored in a memory and on reception of a new current temporal information, the latter replaces the current temporal information as long as the new temporal information temporally advances the current temporal information.

4. Method according to anyone of claims 1 to 3, **characterized in that** the temporal information determines a date and a time.

5. Method according to claim 4, **characterized in that** the current temporal information of the security module serves to verify the validity duration of a right necessary for the decryption of the digital data stream.

6. Method according to claim 1, **characterized in that** the apparatus receives temporal information when it is connected to a management center, said information update a counter in the apparatus providing a value representative of the date and time that will be stored then compared with the value of the temporal information generated by the internal clock of the apparatus.

7. Method according to claim 6, **characterized in that** the internal clock of the apparatus is updated according to the result of the comparison, the new value being transmitted to the security module.

8. Method according to claim 1, **characterized in that** the internal clock of the apparatus is updated by temporal information transmitted by control messages ECM broadcasted when said apparatus is connected to a management center.

9. Method according to any one of the claims 1 to 8, **characterized in that** the apparatus is a digital video recorder PVR for digital pay television programs.

## Patentansprüche

1. Verfahren zur Verbuchung einer Zeitdauer in einem Sicherheitsmodul, der in ein Gerät eingefügt ist, das eine innere Uhr umfasst, wobei dieses Gerät einen digitalen Datenstrom empfängt, der mit Steuerwörtern verschlüsselt worden ist, die in Steuernachrichten ECM enthalten sind, und dieses Verfahren die folgenden Schritte umfasst:
- Empfang von Daten, die von der inneren Uhr des Geräts kommen und eine aktuelle Zeitinformation umfassen, durch den Sicherheitsmodul,
- Speicherung der aktuellen Daten, die die aktuelle Zeitinformation darstellen, im Sicherheitsmodul,
- Empfang einer Steuernachricht ECM, die die Entschlüsselung von zumindest einem Steuerwort verlangt, durch den Sicherheitsmodul,
- Auslesen von voraufgegangenen Daten, die eine voraufgegangene Zeitinformation zum Zeitpunkt der Verarbeitung der voraufgegangenen Steuernachricht ECM darstellen,
- Verarbeitung der Steuernachricht ECM, wenn die aktuelle Information der voraufgegangenen Information zeitlich voraus ist.

2. Verfahren nach Anspruch 1, **dadurch gekennzeichnet, dass** die Bedingung, die das zeitliche Voranschreiten definiert, durch die Frequenz der Änderung der Steuerwörter bestimmt ist.

3. Verfahren nach Anspruch 1, **dadurch gekennzeichnet, dass** die aktuelle Zeitinformation in einem Speicher gespeichert wird und bei Empfang einer neuen Zeitinformation diese die aktuelle Zeitinformation ersetzt, sofern die neue Zeitinformation der aktuellen Zeitinformation zeitlich voraus ist.

4. Verfahren nach einem der Ansprüche 1 bis 3, **dadurch gekennzeichnet, dass** die Zeitinformation ein Datum und eine Uhrzeit bestimmt.

5. Verfahren nach Anspruch 4, **dadurch gekennzeichnet, dass** die aktuelle Zeitinformation des Sicherheitsmoduls dazu dient, die Gültigkeitsdauer einer Berechtigung zu überprüfen, die für die Entschlüsselung des digitalen Datenstromes erforderlich ist.

6. Verfahren nach Anspruch 1, **dadurch gekennzeichnet, dass** das Gerät Zeitinformationen empfängt, während es mit einem Verwaltungszentrum verbunden ist, wobei diese Informationen dazu dienen, einen Zähler im Gerät aktualisieren, der einen Wert liefert, der für das Datum und die Uhrzeit repräsentativ ist und der gespeichert und dann mit dem Wert der Zeitinformation verglichen wird, der durch die innere Uhr des Geräts erzeugt wird.

7. Verfahren nach Anspruch 6, **dadurch gekennzeichnet, dass** die innere Uhr des Geräts in Abhängigkeit vom Ergebnis des Vergleichs aktualisiert wird, wobei der neue Wert an den Sicherheitsmodul übermittelt wird.

8. Verfahren nach Anspruch 1, **dadurch gekennzeichnet, dass** die innere Uhr des Geräts durch die Zeitinformationen aktualisiert wird, die mit den Steuernachrichten ECM übermittelt werden, die ausgesendet werden, während das Gerät mit einem Verwaltungszentrum verbunden ist.

9. Verfahren nach einem der Ansprüche 1 bis 8, **dadurch gekennzeichnet, dass** das Gerät ein digitales Videoaufzeichungsgerät PVR für digitale Gebührenfernsehprogramme ist.
